# EUROPEAN PATENT SPECIFICATION

(11) **EP 4 431 054 B1**
(45) Date of publication and mention of the grant of the patent: **22.04.2026**
(21) Application number: 23382241.0
(22) Date of filing: 15.03.2023
(51) Int. Cl.: A61C 8/00

(54) **INTERNAL TRANSEPTHELIAL ABUTMENT**
INNERES TRANSEPTHELIALES ABTUTMENT
PILIER TRANSÉPITHÉLIAL INTERNE

(43) Date of publication of application: 18.09.2024
(73) Proprietor: Talladium España, S.L., 25005 Lleida (ES)
(72) Inventor: IN, Yuan-Che, 25005 Lleida (ES); Carrero, Xavier, 25005 Lleida (ES); Sassi, Sebastian, 25005 Lleida (ES)
(74) Representative: Carlos Hernando, Borja

(56) References cited:
- US-A1- 2018 338 818
- US-A1- 2020 197 135
- US-A1- 2022 387 144

## Description

### OBJECT OF THE INVENTION

The present invention,an internal transepithelial abutment, relates to a device used as an attachment between an implant and a dental prosthesis, the main purpose of which is to solve problems associated with prosthesis height and angulation. Preferably, the transepithelial device or abutment is made of a biocompatible material and is anchored to and integral with the dental implant.

The field of application is the field of dentistry and particularly interface devices for fixing prostheses on dental implants, mounted on the upper and lower jaws, and on which there is coupled the prosthesis which can be a crown or a dental superstructure, such as a bridge or a complete dental prosthesis.

### BACKGROUND OF THE INVENTION

Today, dental implantology techniques allow the replacement of dental roots by means of biocompatible dental implants, generally made of a certain titanium alloy, to which the corresponding prostheses or artificial teeth are attached.

Generally, the process of implanting said implants includes an initial implant insertion phase, followed by an intermediate osseointegration phase that requires a wait period, and finally the final prosthesis fixing phase.

Prior to fixing the final prosthesis, a provisional prosthesis, that is as similar as possible to the final prosthesis, can be placed on the implant, which allows making an early use of said prosthesis with or without functional loading, but achieving the esthetic function immediately. The transepithelial abutment is the part of the fixing that protrudes from the mouth. In other words, it is the part which ensures that the dental implant and the crown fit and are coupled to one another, thereby supporting the dental prosthesis.

The techniques available today allow said attachment of the crown or anatomical prosthesis to be made by means of attachment cement or screw-retained cement, which gives rise to cemented prostheses or screw-retained prostheses, and in which standard abutments prefabricated in titanium or prostheses custom-made using mainly CAD-CAM methods are typically used.

Although the surgical techniques for implant insertion and positioning have improved considerably today, with there being surgical guiding systems, with advance planning by means of CT-type radiographic methods, previously formed for positioning the implant in the bone, the final position of the implant will always depend on the bone structure resulting from the osseointegration process and on the insertion positions, from the position antagonist to the implant being placed to the inclined positions of the implant, that usually range between 0° and 45°, with the latter being the most unfavorable.

A significant number of situations will arise and providing all the straight and angled abutments manufactured in a standard manner to solve all the drawbacks that occur in implant rehabilitations by means of their corresponding prosthesis is impossible.

Among prosthetic solutions, transepithelial abutments are one of the most highly regarded products among users. These abutments, which act as an attachment between the implant and the crown or dental prosthesis (complete prostheses, crown, or bridge), have different characteristics and advantages that allow improving precision and comfort in dental procedures, as well as preventing possible complications for the patient.

The all-on-four technique, which is an implantology technique for solving full-arch treatments with only 4 implants and with the placement of a fixed prosthesis along the entire arch on the same day of surgery, stands out among the known techniques. Transepithelial abutments, combining angled and/or straight abutments according to the required adaptation of the anatomy to the prosthesis, are typically used in this system to solve the cases that are being detected.

Therefore, the main objective of the present invention relates to a straight transepithelial abutment with an internal connection that allows inserting therein multiple prostheses with angulation divergences between implants of between 0° and 60°.

US2022/387144 discloses a multi-unit dental abutment with a threaded base post, ball-and-swivel assembly, and lock screw enables tool-driven implant attachment and subsequent fixation of a coping-mating swivel shell at a selectable tilt and azimuthal orientation.

### DESCRIPTION OF THE INVENTION

Therefore, the present invention relates to a straight transepithelial abutment with an internal connection and which can have multiple gingival heights. Likewise, the abutment has a different coupling depending on the dental implant system on which it is applied, that is, it has a direct connection to an endosseous dental implant. The abutment allows the coupling or insertion of preferably multiple prostheses, with angulation divergences between implants of between 0° and 60°. The abutment object of the present invention is particularly designed to be used both in multiple prosthesis restoration and in single crowns.

The material of the transepithelial abutment is preferably a biocompatible material,
A first object of the present invention therefore relates to a transepithelial abutment for attachment between a dental structure and a dental implant according to claim 1.

Specifically, the transepithelial abutment object of the invention comprises a body of revolution about an axis "a" with a first area or upper area, arranged at a first end of the body, with a preferably flat upper surface, a first outer wall and a first cavity with a first inner wall; a second area or lower area, arranged at the second end of the body of the abutment, with a threaded external surface; and a third area or intermediate area, arranged between said first area and said second area, with a second outer wall extending from the first outer wall to the threaded external surface, and having immediately after the first cavity, a second cavity with a threaded inner wall; the attachment between the upper surface and the first outer wall having a beveled surface or outer bevel.

Preferably, a dental structure, understood to mean the dental prosthesis and those components required for the coupling thereof to the transepithelial abutment which is connected to a dental implant by means of screwing, will be arranged only on the bevel or beveled surface. For example, said elements can be an interface on which a dental prosthesis is cemented, this assembly being subsequently screwed onto the transepithelial abutment, previously screwed onto an implant.

Sometimes it may be necessary to use intermediate components, mainly in the case of a multiple prosthesis, that is, a prosthesis that is connected to several bone implants and not just one. In these cases, a tubular component, similar to a bushing, is arranged inside the first cavity of the abutment object of the invention, said bushing having an upper end projecting above the first cavity to be supported on the outer bevel of the transepithelial abutment object of the invention. An interface with the cemented dental prosthesis can be introduced inside said bushing, and subsequently, by means of a first screw that goes through the structure, the prosthesis, and the interface, the structure will be fitted to the abutment by means of screwing said first screw into the second cavity with the threaded inner wall of the abutment. The abutment is previously held inside the implant by means of screwing the threaded external surface of the abutment into the implant which has a complementary thread. To that end, a screwdriver the head of which is complementary to the inner wall of the first cavity, thereby making it possible to rotate the threaded external surface of the abutment into the cavity of the implant, is used.

The bushing or an intermediate part between the structure and the first cavity of the abutment makes it possible to rotate the structure with respect to the abutment, which simplifies the operation in the event that it is necessary to connect a multiple prosthesis with various implants.

Preferably, the first cavity is larger than the second cavity.

In a preferred alternative, the first outer wall is flat with a constant diameter.

In another preferred alternative, the first inner wall of the first cavity describes a non-circular geometric profile which is used to connect a screwdriver head which, when introduced into said first cavity, allows rotating the threaded external surface of the abutment into the implant. Preferably, said geometric profile has at least two recesses and two protrusions that are preferably lobular, where it can also has three, four, five, six, and eight recesses and protrusions. More preferably, said geometric profile is hexalobular, with six recesses and six protrusions that are lobular alternating with one another.

In a preferred construction, the diameter of the first outer wall is greater than the diameter of the second outer wall. More preferably, the diameter of the second outer wall decreases between the first outer wall and the threaded external surface.

The lower part of the second outer wall, located immediately before the threaded external surface, has a shape complementary to the connection area of the implant, being introduced into the housing of the implant, and said connection area varying depending on the type of connection of the implant. This lower part of the second wall can be rotary or non-rotary, depending on the connection of the implant. The thread of the threaded external surface is the same as the thread of the inner housing of the implant.

Likewise, the upper part of the second outer wall after said first part, which is the part projecting above the implant, can have different external shapes such as, for example, conical, elliptical with a radius profile, or a combination thereof, so as to perform gum shaping according to the required shape. Likewise, the height of the upper part of said second outer wall is the one that mainly determines the gingival height of the gum, therefore, an abutment with one height or another will be used depending on the gingival height of the patient. This height may vary, and will preferably have a length of between 0.3 mm and 7 mm.

In accordance with the foregoing, the transepithelial abutment object of the invention is made up of a single body despite having different areas. As mentioned, the abutment is properly screwed onto the implant until it is duly fixed and biologically closed in the intended position between the abutment and the implant. The pressure usually applied between them to prevent their rotation is preferably between 15 and 40 N·cm.

The beveled surface, between the upper surface and the first outer wall, acts as a support surface, maintaining constant dimensions around the upper area of the body of the abutment, making it possible to better support the dental prosthesis or dental structure on said abutment. This beveled surface can have different diameters depending on the dental structure or dental abutments located thereon. A narrower support surface is much more esthetic than a wide support surface, depending on the situation in each case, with the diameter of the first outer wall preferably being between 2.5 mm and 6 mm.

This beveled support surface with constant support dimensions along the entire first area allows improved biological closure between the dental prosthesis or dental structure and the abutment as a result of a larger and better contact surface between the mentioned elements, due to the fact that contact is made with the beveled surface that has an inclination with respect to said upper surface. The upper surface is preferably flat and perpendicular to the axis of rotation of the body of the abutment and the beveled surface forms an angle of between 1° and 89°, preferably between 30° and 70° with the axis of the abutment, more preferably between 40° and 60°, and even more preferably 50°, with said axis of rotation.

Preferably, the attachment between the first inner wall and the upper surface of the abutment object of the invention also has a beveled surface between them, thereby contributing to an improved insertion of the dental prosthesis or structure into the first cavity.

In accordance with the foregoing, the present invention allows:
- Increasing the contact surface between the dental prosthesis, or the dental structure, or intermediate components of the dental prosthesis and structure and the transepithelial abutment,
- Improving said contact surface, achieving improved biological closure, and
- Reducing the gingival height of the assembly formed by the transepithelial abutment and the dental prosthesis or structure.

The components fitting into this transepithelial abutment can be the same for the fixing of all implant compatibilities, depending only on whether it is for complete prostheses, bridges, or single crowns, such as a healing cap, a straight or dynamic abutment element, CAD/CAM structures, among others.

The transepithelial abutment object of the present invention is designed to be used in the upper or lower jaw and to support tooth replacements for the purpose of restoring chewing function and esthetics. These abutments, in combination with endosseous implants, are indicated for both multiple restorations and single tooth restorations.

In the present invention, the term "bevel" is to be interpreted as a plane which is provided instead of a corner and which attaches two angle-forming surfaces. Likewise, the beveled surface is a succession of the preceding planes, forming a surface which attaches the two angle-forming surfaces.

### BRIEF DESCRIPTION OF THE FIGURES

To complement the description that is being made and for the purpose of facilitating the understanding of the features of the invention, a set of non-limiting illustrative drawings is attached as part of said description.
Figure 1 shows a perspective view of the internal transepithelial abutment.
Figure 2 shows a second perspective view of the abutment object of the invention.
Figure 3 shows an elevational view and a section of the internal transepithelial abutment.
Figure 4 shows a top view of the internal transepithelial abutment in which the mainly hexalobular inner geometric profile can be seen.
Figure 5 shows a side view with partial section depicting an implant assembly with the transepithelial abutment object of the invention.

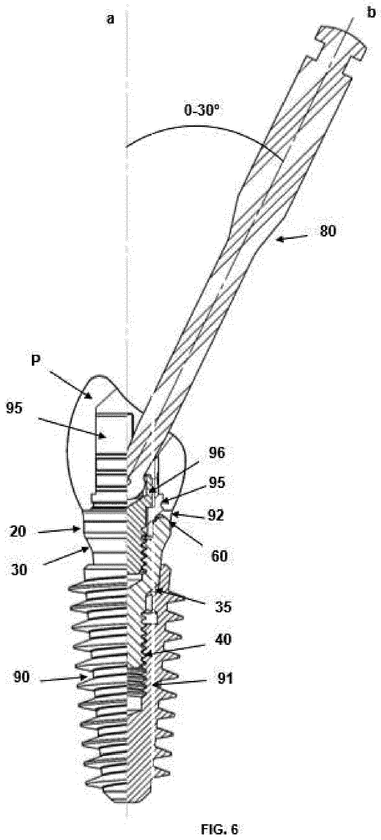

Figure 6 shows a sectioned view of the internal transepithelial abutment object of the present invention placed on the dental implant and an anatomical dental prosthesis made of a TiBase + zirconium-type biocompatible material, obtained by means of CAD-CAM methods, sintered, re-machined, or milled metal part, in this case related to an interface or TiBase part, with its respective screw, interposed between the internal transepithelial abutment object of the invention and the tooth. A screwdriver in charge of screwing the screw of the metal, or interface, or TiBase part on the upper body of the internal transepithelial abutment object of the invention can also be seen.

### PREFERRED EMBODIMENT OF THE INVENTION

A detailed description of at least one embodiment of the invention is provided below in accordance with the preceding figures.

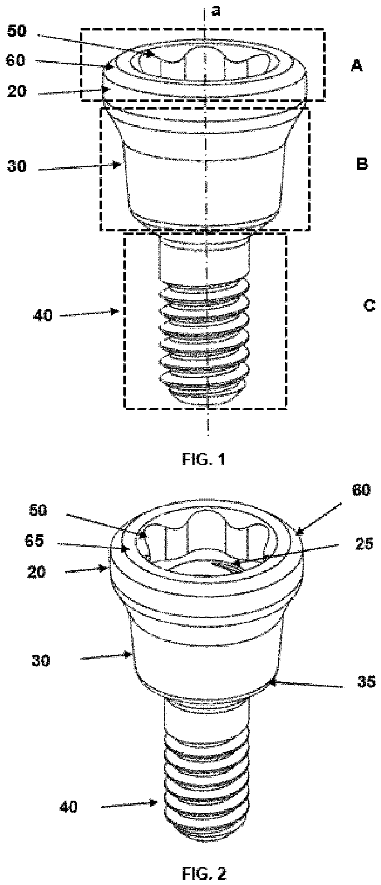

Figures 1 and 2 show the transepithelial abutment object of the invention, specifically a straight internal transepithelial abutment, with a body of revolution with respect to an axis "a" comprising three differentiated areas, a first upper area or upper area (A), a second area or lower area (C), and a third area or intermediate area (C).

The first area or upper area (A) is arranged at a first end of the body of the abutment and has an upper surface (65) that is, but not necessarily, flat, a first outer wall (20), and a first cavity (50), having a beveled surface (60) between the flat upper surface (65) and the first outer wall (20). The preferably flat upper surface (65) forms an angle of 90° with axis "a" of the abutment object of the invention. Preferably, the attachment between the first cavity (50) and the flat upper surface (65) also has a beveled surface (60), forming an angle of between 1° and 89° with axis "a", preferably between 30° and 70° with axis "a" of the abutment, more preferably between 40° and 60°, and even more preferably 50°. Said first cavity (50) has a geometry that is preferably hexalobular (70) for the introduction of the head of a screwdriver (80) with a complementary outer surface, so that it can act on the abutment. A final dental structure (P), or a sintered metal part, or a re-machined or milled part, preferably linked, by means of a screw (96), with an interface part (95) or a TiBase part (Figure 6), will be placed on the first end of the body of the abutment, particularly on the outer beveled surface (60) located between the first outer wall (20) and the upper surface (65).

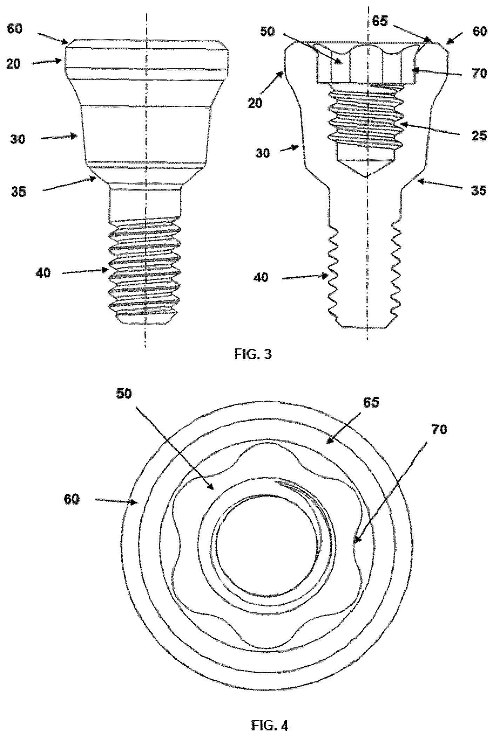

After the first area (A), the intermediate area (B) is arranged after the first area (A). This intermediate area (C) has a second outer wall (30) extending after the first outer wall (20). Likewise, said intermediate area (B) also has a second cavity with a threaded inner wall (25) immediately after the first cavity (50) (Figure 3).

Subsequently, after said intermediate area (B), the third area (C) is arranged as a continuation of the second outer wall (30) and ends in a threaded surface (40). This threaded outer surface (40) is introduced into the housing (91) of a dental implant (90) to connect the abutment object of the invention to said implant (90). The upper part of the housing (91) of the implant (90) also receives a lower part of the second outer wall (30) of the abutment. Said lower part (35) of the second outer wall (30) has a geometry or surface that is complementary to the geometry or upper surface of the cavity (91) of the implant (90). Both complementary surfaces will vary depending on the type of connection of the implant (90). To introduce the abutment into the cavity (91) of the implant (90), the outer surface (40) of the abutment is screwed into the housing (91) with the help of a screwdriver (80).

Figure 2 shows how the abutment has an inner opening with a thread 25 therein for the placement and attachment, with a screw, of other possible dental components through said upper body 20. In this figure it can also be seen how the lower part 30 has a lower geometry 35 that will depend on the type of dental implant to which the abutment will be connected, with the thread 40 projecting from below.

Figure 3 shows, in addition to an elevational view, a cross-section in which the transepithelial abutment is observed in accordance with the description. In particular, the figure shows the second threaded cavity (25) in which a screw (96) will be coupled after introducing a dental structure, or after introducing another dental component, before the structure, into the first cavity (50), which screw (96) will fasten the dental structure to the abutment (Figure 6). Likewise, the outer thread (40) that allows coupling with the dental implant (90) is observed.

The transepithelial abutment has an upper support surface with a beveled surface (60) on which the dental structure or possible dental components that are coupled to the abutment will be supported. Alternatively, said structure or components could be supported on the flat upper surface (65). Therefore, a constant and balanced support for said prosthesis (P) or dental components is maintained, which will result in an improved seating of said components on the abutment, mainly when they are supported on the beveled surface (60). This beveled support surface (60) has said inclination because the dental components that are supported thereon will have a wide insertion of up to 60° in critical cases.

As mentioned, the lower part (35) of the second outer surface (30), located below the beveled support surface (60) will depend on the type of implant (90) to which the abutment will be coupled, and more specifically on the type of connection of said implant (90), since said lower part (35) of the abutment and of the second outer wall will be fixed to the upper or lower jaw implant (90) since it is introduced into the housing (91) of the abutment (90). Therefore, the design of the second outer wall (30) and its lower part (35), or connection, with the implant (90) will vary depending on the type of implant (90) to be used, as well as the type of outer thread (40), which will also depend on the type of implant (90).

Figure 3 shows the section of the first cavity which is hexalobular (70) in this example, with the height or depth of said cavity being at least 1 mm. The total length of the abutment may vary depending on the gingival height required, preferably increasing, depending on the height needs, the upper part of the outer wall (30), over the lower part of the outer wall (35) which is introduced into the implant (90).

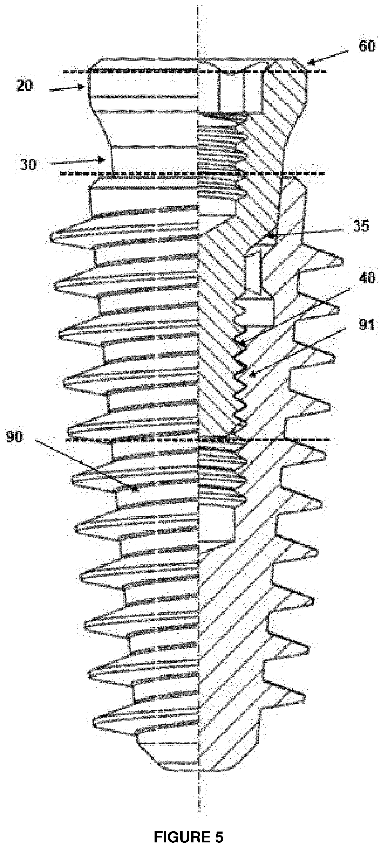

Figure 5 shows a connection of the abutment object of the invention on an implant (P). In that sense, the second outer wall (30), specifically the lower part (35) of said second outer wall (30), is located inside the housing (91) of the implant (90), causing the geometry of the lower part (35) to coincide with the complementary shape on the implant (90). Subsequently, the external thread (40) is screwed into the thread of the housing (91) inside the implant (90). In addition, a dental prosthesis (P) can be placed directly on the upper surface of the abutment, for example, by means of cementing, said prosthesis being preferably supported on the beveled surface (60) although, alternatively, it could be supported on the flat upper surface (65). Alternatively, it can have another dental device such as, for example, an interface (95) that acts as an attachment between the abutment and the prosthesis (P), said interface, however, also being preferably supported on the beveled surface (60) although, alternatively, it could also be supported on the flat upper surface (65). Said upper surfaces (60, 65) on which the dental structure or other possible dental components are supported maintain their geometry by maintaining the same surface along their entire perimeter. Therefore, with this geometry and construction, it is achieved that the abutment has greater support for the structures and complementary components that are installed thereon, thereby improving biological closure and the distribution of different chewing loads of the dental structure arranged on the abutment and towards the implant.

This Figure 5 shows the gingival height delimited by the two dashed lines at the upper part of the figure. Specifically, between the upper dashed line which passes at about the height of the lower part of the beveled surface (60) and the dashed line immediately after which passes at about the height of the upper end of the implant (90).

Figure 67 shows an abutment object of the invention on which there is arranged an intermediate dental element (95) or interface which is fastened to the abutment, specifically to its first area (A). The transepithelial abutment has been previously screwed through its threaded outer surface (40) to the partially threaded housing (91) of the implant (90). The dental prosthesis or tooth (P) is arranged on said intermediate dental element (95) preferably by means of cementing. Said intermediate dental element or interface (95) is preferably supported on the beveled upper surface (60), maintaining constant dimensions in said upper part of the abutment. To fasten the intermediate element (95), as well as the dental prosthesis (P), a screw (96) that goes through both and is screwed into the second threaded cavity (25) of the abutment is used. Said screwing is done with a screwdriver (80) that allows an inclination of between 0° and 30°, that is, between an axis "a" of the transepithelial abutment and the assembly of which it is a part, and an axis "b" of the screwdriver (80).

An intermediate element (92) arranged between the interface (95) and the abutment is also shown in this example. This intermediate element (92) is particularly applicable in the case of a multiple prosthesis, that is, a prosthesis that is connected to various bone implants (90) and not just one. In these cases, said intermediate element (92) can be a bushing-like tubular component (92) arranged inside the first cavity (50) of the abutment, said bushing (92) having an upper end projecting above the first cavity (50) to be supported on the outer bevel (60) of the transepithelial abutment. An interface (95) with the cemented dental prosthesis (P) can be introduced inside said bushing, and subsequently, by means of a first screw (96) that goes through the structure, the prosthesis, and the interface, the structure will be fitted to the abutment by means of screwing said first screw (96) into the second cavity (25) with the threaded inner wall of the abutment. The bushing (92) or an intermediate part arranged between the structure and the first cavity (50) of the abutment makes it possible to rotate the structure with respect to the abutment, which simplifies the operation in the event that it is necessary to connect a multiple prosthesis with various implants.

## Claims

1. A transepithelial abutment for attachment between a dental structure and a dental implant, comprising an outer shape of a body of revolution about an axis "a":
- A first area or upper area (A), arranged at a first end of the body, with an upper surface (65), a first outer wall (20), and a first cavity (50) with a first inner wall, wherein the attachment between the upper surface (65) and the first outer wall (20) has a bevel (60),
- A second area or lower area (C), arranged at the second end of the abutment, with a threaded external surface (40), and
- A third area or intermediate area (B), arranged between said first area (A) and said second area (B), with a second outer wall (30) extending from the first outer wall (20) to the threaded external surface (40), and having a second cavity with a threaded inner wall (25) immediately after the first cavity (50),
wherein :
- the abutment is formed as a single body,
- the bevel is a constant beveled surface configured to provide better support and improved biological closure between the abutment and the dental structure, and
- the first inner wall of the first cavity (50) describes a non-circular geometric profile with at least two lobular recesses and two lobular protrusions.

2. The abutment according to claim 1, **characterized in that** the first cavity is larger than the second cavity.

3. The abutment according to any of the preceding claims, **characterized in that** the first outer wall (20) is flat with a constant diameter.

4. The abutment according to claim 1, **characterized in that** the geometric profile of the first inner wall is hexalobular, with six recesses and six protrusions alternating with one another.

5. The abutment according to any of the preceding claims, **characterized in that** the diameter of the first outer wall (20) is greater than the diameter of the second outer wall (30).

6. The abutment according to any of the preceding claims, **characterized in that** the diameter of the second outer wall (30) decreases between the first outer wall (20) and the threaded external surface (40).

## Patentansprüche

1. Transepitheliales Abutment zur Befestigung zwischen einer Zahnstruktur und einem Zahnimplantat, wobei eine Außenform eines Rotationskörpers um eine Achse "a" Folgendes umfasst:
- einen ersten Bereich oder oberen Bereich (A), der an einem ersten Ende des Körpers angeordnet ist, mit einer oberen Fläche (65), einer ersten Außenwand (20) und einem ersten Hohlraum (50) mit einer ersten Innenwand, wobei die Befestigung zwischen der oberen Fläche (65) und der ersten Außenwand (20) eine Abschrägung (60) aufweist,
- einen zweiten Bereich oder unteren Bereich (C), der am zweiten Ende des Abutments angeordnet ist, mit einer Gewindeaußenfläche (40), und
- einen dritten Bereich oder Zwischenbereich (B), der zwischen dem ersten Bereich (A) und dem zweiten Bereich (B) angeordnet ist, mit einer zweiten Außenwand (30), die sich von der ersten Außenwand (20) bis zur Gewindeaußenfläche (40) erstreckt, und mit einem zweiten Hohlraum mit einer Gewindeinnenwand (25) unmittelbar nach dem ersten Hohlraum (50),
wobei:
- das Abutment als ein einziger Körper ausgebildet ist,
- die Abschrägung eine konstante abgeschrägte Fläche ist, die dazu konfiguriert ist, eine bessere Abstützung und einen verbesserten biologischen Verschluss zwischen dem Abutment und der Zahnstruktur zu bieten, und
- die erste Innenwand des ersten Hohlraums (50) ein nicht kreisförmiges geometrisches Profil mit mindestens zwei lobulären Aussparungen und zwei lobulären Vorsprüngen beschreibt.

2. Abutment nach Anspruch 1, **dadurch gekennzeichnet, dass** der erste Hohlraum größer ist als der zweite Hohlraum.

3. Abutment nach einem der vorhergehenden Ansprüche, **dadurch gekennzeichnet, dass** die erste Außenwand (20) flach mit einem konstanten Durchmesser ist.

4. Abutment nach Anspruch 1, **dadurch gekennzeichnet, dass** das geometrische Profil der ersten Innenwand hexalobulär ist, mit sechs Aussparungen und sechs Vorsprüngen, die sich abwechseln.

5. Abutment nach einem der vorhergehenden Ansprüche, **dadurch gekennzeichnet, dass** der Durchmesser der ersten Außenwand (20) größer ist als der Durchmesser der zweiten Außenwand (30).

6. Abutment nach einem der vorhergehenden Ansprüche, **dadurch gekennzeichnet, dass** der Durchmesser der zweiten Außenwand (30) zwischen der ersten Außenwand (20) und der Gewindeaußenfläche (40) abnimmt.

## Revendications

1. Pilier transépithélial destiné à être fixé entre une structure dentaire et un implant dentaire, comprenant une forme extérieure d'un corps de révolution autour d'un axe « a » :
- une première zone ou zone supérieure (A), agencée à une première extrémité du corps, avec une surface supérieure (65), une première paroi externe (20) et une première cavité (50) avec une première paroi interne, dans laquelle la liaison entre la surface supérieure (65) et la première paroi externe (20) comporte un chanfrein (60),
- une seconde zone ou zone inférieure (C), agencée à la seconde extrémité du pilier, avec une surface externe filetée (40), et
- une troisième zone ou zone intermédiaire (B), agencée entre ladite première zone (A) et ladite seconde zone (C), avec une seconde paroi externe (30) s'étendant depuis la première paroi externe (20) jusqu'à la surface externe filetée (40), et comportant une seconde cavité avec une paroi interne filetée (25) immédiatement après la première cavité (50),
dans lequel :
- le pilier est formé en un seul corps,
le chanfrein est une surface chanfreinée constante configurée pour assurer un meilleur support et une fermeture biologique améliorée entre le pilier et la structure dentaire, et
la première paroi interne de la première cavité (50) présente un profil géométrique non circulaire comportant au moins deux évidements lobulaires et deux saillies lobulaires.

2. Pilier selon la revendication 1, **caractérisé en ce que** la première cavité est plus grande que la seconde cavité.

3. Pilier selon l'une quelconque des revendications précédentes, **caractérisé en ce que** la première paroi externe (20) est plane avec un diamètre constant.

4. Pilier selon la revendication 1, **caractérisé en ce que** le profil géométrique de la première paroi interne est hexalobulaire, avec six évidements et six saillies alternant les uns avec les autres.

5. Pilier selon l'une quelconque des revendications précédentes, **caractérisé en ce que** le diamètre de la première paroi externe (20) est supérieur au diamètre de la seconde paroi externe (30).

6. Pilier selon l'une quelconque des revendications précédentes, **caractérisé en ce que** le diamètre de la seconde paroi externe (30) diminue entre la première paroi externe (20) et la surface externe filetée (40).
